# EUROPEAN PATENT APPLICATION

(11) **EP 4 012 001 A1**
(43) Date of publication of application: **15.06.2022**
(21) Application number: 20306526.3
(22) Date of filing: 10.12.2020
(51) Int. Cl.: C09J 171/02, C09J 7/35, C08K 3/011

(54) **METHODS FOR USING ADHESIVES WHICH ARE THERMALLY-REVERSIBLE AND TEMPERATURE-SENSITIVE**

(71) Applicant: Bostik SA, 92700 Colombes (FR)
(72) Inventor: COURT, François, 92700 COLOMBES (FR); GRAY, Steven Daniel, Wauwatosa, WI 53226 (US); HU, Miao, Wauwatosa, WI 53226 (US)
(74) Representative: Arkema Patent

(57) **Abstract**

Adhesives comprising a silyl-terminated polyether and a tackifying resin provide a considerably reduced tack at relatively slight increases in temperature, undergo purely adhesive failure at such increased temperatures, and have reversible properties (i.e., such properties are substantially retained upon cooling). Such adhesives may be used to reversibly bond a first substrate surface coated with the adhesive to a second substrate surface by adhering the substrate surfaces together at a first temperature; heating the adhesive to a second temperature at least about 20 °C above the first temperature and below the thermal degradation temperature; and separating the substrate surfaces from one another at the second temperature, wherein the adhesive comprises the cured product of a silyl-terminated polyether and a tackifier. Such adhesives may also be cleanly transferred from to a different substrate at such elevated temperatures. Such adhesives may be used for tapes suitable for easy removal at elevated temperatures.

## Description

### FIELD OF THE INVENTION

This invention relates to methods for using adhesives which are thermally-reversible and which undergo significant reductions in tack upon heating to relatively slight increases in temperature, undergo purely adhesive failure at such increased temperature, and have properties which are reversible. The invention utilizes these properties by allowing for reversibly bonding two substrate surfaces, wherein the substrate surfaces can be easily removed from one another upon heating the adhesive and re-bonded upon cooling the adhesive. The invention also provides for adhesive to be transferred to a different substrate upon heating.

### BACKGROUND OF THE INVENTION

Pressure sensitive adhesives (PSA) used in tape applications are produced by a variety of routes and with a wide range of polymer chemistries. Solution-based methods generally involve dissolving a low-modulus polymer in a solvent to generate a free-flowing solution that can be readily coated to substrates which - after solvent evaporation - leaves a thin polymer layer with the proper modulus to form bonds. Aqueous suspensions of polymers can also be employed. For example, low viscosity, water-based dispersions of vinyl acetate polymers, ethylene vinyl acetate (EVA), acrylics, styrenebutadiene rubber (SBR), natural rubber latexes, synthetic elastomers, and polyurethanes (PUR) can be easily coated which, upon water evaporation and particle merging, generate a polymer film suitable for many tape applications.

Hot melt pressure sensitive adhesives (HMPSA) can also be used in tape applications. In these cases, various rubbers, styrene block copolymers (SBc), and thermoplastic elastomers such as polyolefin copolymers of ethylene, propylene, butene, vinylacetate, and the like are plasticized using a variety of low molecular weight materials to decrease chain entanglement density and impart high flow. Additional low molecular weight components, such as tackifiers, are also added to the formulation to balance the modulus of the material, including balancing tack versus cohesive strength, as well as thermal transitions (e.g. the glass transition temperature, Tg) based on the end-use application. These PSA materials generally possess high tack and can be used to provide tapes with high peel values; nevertheless, these formulations - like the solvent-based and water-borne systems mentioned above - require the use of relatively low modulus materials as the base polymer and, therefore, do not generally display extremely high creep, shear, or thermal resistance. Therefore, they are unsuitable for demanding applications requiring high shear adhesion failure temperature (SAFT) performance.

After bond formation, in-place curing methods can be employed to improve the shear and thermal performance of any of the above technologies. These curing methods typically involve exposure to energy sources that induce cross-linking reactions. The resultant networked polymers generally display increased stiffness (modulus), however, and, in turn, lower tack. Accordingly, when the adhesive needs to be de-bonded to service the final component, these cross-linked materials are unlikely to possess the pressure-sensitivity required to form strong bonds to allow the part to be reassembled using the same adhesive.

An alternative technology involves coating low molecular weight "pre-polymers" which, when cured, form a low modulus, polymer network with high tack and high cohesive strength required for high performance tape applications. In addition to displaying high peel strengths, the networked nature materials display low creep, high shear strength, and good thermal resistance. While this class of cured system displays all the features required for high performance tape applications, the strong bonding offered by these systems precludes them from being cleanly removed in an adhesive fashion with minimal force - specifically forces below those where undesirable deformation or destruction of the adhered substrates would be seen.

U.S. Patent No. 8,796,389 describes a method for "reversible" covalent crosslinking of adhesives using acrylate polymers and agents which promote cross-linking. The adhesives described therein are "reversible once," meaning that the cross-linked network can be destroyed, but not necessarily be reproduced.

Luo, X., et al., "A Thermally Responsive, Rigid, and Reversible Adhesive," Polymer, 2010, 51, 1169, describe a reversible adhesive that possesses the ability to easily de-bond upon heating. The material is a blend of poly(ε-caprolactone) (PCL) and diglycidyl ether of bisphenol-A/diaminodiphenylsulfone (DGEBA/DDS) epoxy, processed to a unique morphology via polymerizationinduced phase separation (PIPS).

### SUMMARY OF THE INVENTION

In view of the shortcomings of the prior art, it would be advantageous to provide hot melt adhesives that form strong bonds between a variety of substrates and between surfaces of the same substrate as well as display thermal and creep resistance required for high performance applications. It would also be advantageous for such adhesives to permit easily being de-bonded from a substrate, perhaps to permit servicing of a final component, yet still retain pressure-sensitivity required to form strong bonds to allow the component to be reassembled using the same adhesive.

Embodiments of the present invention provide adhesives that satisfy these shortcomings and form strong bonds between a variety of substrates and between surfaces of the same substrate as well as display thermal and creep resistance required for high performance applications. Surprisingly, it has been discovered that tapes made from the inventive formulations can be designed such that the intrinsic tack decreases substantially at slightly elevated temperatures (e.g., greater than 50 °C). The loss of tack occurs below the adhesive's thermal degradation temperature, so that the mechanical properties of the adherents would not be compromised by being exposed to such high temperatures. Thus, while capable of meeting the requirements of high performance applications, embodiments of the formulations described herein, and tapes using such formulations, can be easily de-bonded with mild heating to allow components to be selectively removed or disassembled for maintenance, repair, or replacement. At elevated temperatures, the loss of tack can be significant in some embodiments (e.g., up to 90% of initial tack) resulting in adhesive failures at extremely low peel forces such that disassembly of the adhered components can be performed without significant mechanical deformation or destruction of even fragile substrates. Additionally, the loss of tack of adhesives according to embodiments described herein is thermally-reversible; therefore, separated parts and components can be readily re-bonded at room temperature.

In accordance with an embodiment of the present invention, a method of reversibly bonding a first substrate surface to a second substrate surface comprises the steps of:
(a) adhering the first substrate surface to the second substrate surface by contacting the first substrate surface, wherein the first substrate surface is coated with a cured, thermally-reversible adhesive, with the second substrate surface at a first temperature;
(b) heating the adhesive to a second temperature which is at least about 20°C above the first temperature, preferably at least 30°C above the first temperature, and most preferably at least 50°C above the first temperature, and below the temperature at which the adhesive undergoes thermal degradation, preferably at least 10 °C less than the thermal degradation temperature, more preferably at least 20°C less than the thermal degradation temperature; and
(c) separating the first substrate surface from the second substrate surface at the second temperature,
   wherein the adhesive comprises the cured product of a silyl-terminated polyether and a tackifying resin.

In accordance with another embodiment of the present invention, a method of transferring a thermally-reversible adhesive from a first substrate to a second substrate comprises the steps of:
(a) coating a cured, thermally-reversible adhesive to the first substrate at a first temperature to form a coated first substrate;
(b) heating the adhesive to a second temperature which is at least about 20°C above the first temperature, preferably at least 30°C above the first temperature, and most preferably at least 50°C above the first temperature, and below the temperature at which the adhesive undergoes thermal degradation, preferably at least 10 °C less than the thermal degradation temperature, more preferably at least 20 °C less than the thermal degradation temperature; and
(c) contacting the adhesive coated on the first substrate with the second substrate at said second temperature to cause the adhesive to transfer to the second substrate,
wherein the adhesive comprises the cured product of a silyl-terminated polyether and a tackifying resin.

### DETAILED DESCRIPTION OF THE INVENTION

An embodiment of the present invention is directed to a method of reversibly bonding a first substrate surface to a second substrate surface. Adhesives of the present invention are able to adhere to a wide range of substrates, including metal, glass, wood, plastics, polymeric materials, tile (including ceramic and cementitious materials), other adhesive layers, and nonwoven substrates. In a preferred embodiment, the first substrate forms, with the adhesive, a tape, and the material of the first substrate is selected from the group consisting of polyester, polyolefin, and polystryrene. As used herein, the first substrate surface and the second substrate surface could be different surfaces of the same substrate, in which case the substrate could be folded over on itself upon being formed as a laminate. In another embodiment, the first substrate surface and the second substrate surface could be different surfaces of two different substrates, which could be either the same or different material.

As used herein, "reversibly bonding" means that an adhesive functions to permit easy debonding of the two substrate surfaces when heated, but then, upon cooling, provides adhesive properties identical or substantially similar to those of the adhesive originally (i.e., before it was heated). Such adhesive properties include tack, shear strength, and peel resistance. Unless specified otherwise herein, references to tack are to the "Temperature Dependent Probe Tack" described in the examples below, and references to peel resistance are to the 180° peel test described under the heading of "Thermally-Reversible Bonding Tests" in the examples below.

An embodiment of the present invention is directed to a method of reversibly bonding a first substrate surface to a second substrate surface comprising the steps of:
(a) adhering the first substrate surface to the second substrate surface by contacting the first substrate surface, wherein the first substrate surface is coated with a cured, thermally-reversible adhesive, with the second substrate surface at a first temperature;
(b) heating the adhesive to a second temperature which is at least about 20°C above the first temperature, preferably at least 30°C above the first temperature, and most preferably at least 50°C above the first temperature, and below the temperature at which the adhesive undergoes thermal degradation preferably at least 10°C less than the thermal degradation temperature, more preferably at least 20°C less than the thermal degradation temperature; and
(c) separating the first substrate surface from the second substrate surface at the second temperature.

A preferred aspect of this first embodiment further comprises, after the separating step, cooling the adhesive to the first temperature and adhering the first substrate surface to one of the second substrate surface or a third substrate surface, by contacting the first substrate surface with the second substrate surface or the third substrate surface, at said first temperature. The third substrate surface may be part of the same substrate as the substrate of the first or second substrate surfaces, or it may be the same or a different material as the substrate of the first or second substrate surfaces. According to still another embodiment, the method comprises repeating the heating, separating, cooling, and adhering steps.

Another embodiment of the invention is directed to method of transferring a thermally-reversible adhesive from a first substrate to a second substrate comprising the steps of:
(a) coating a cured, thermally-reversible adhesive to the first substrate at a first temperature to form a coated first substrate;
(b) heating the adhesive to a second temperature which is at least about 20°C above the first temperature, preferably at least 30°C above the first temperature, and most preferably at least 50°C above the first temperature, and below the temperature at which the adhesive undergoes thermal degradation, preferably at least 10 °C less than the thermal degradation temperature, more preferably at least 20°C less than the thermal degradation temperature; and
(c) contacting the adhesive coated on the first substrate with the second substrate at the second temperature to cause the adhesive to transfer to the second substrate.

In both embodiments, the adhesive as coated on first substrate surface (according to the first embodiment mentioned above) or on the first substrate (according to the second embodiment mentioned above) is the cured product of a silyl-terminated polyether and a tackifying resin, as described in more detail below. The time needed for the curing may vary to a large extent, for example between 1 second and many days, depending on the weight per unit area of adhesive composition deposited on the support layer, on the heating temperature and on the relative humidity. This heat-curing step has the effect of creating - between the polymer chains of the polyether and under the action of atmospheric moisture - siloxane-type bonds which result in the formation of a three-dimensional polymer network. The thus cured adhesive composition is a pressure-sensitive adhesive which gives the support layer that is coated therewith desirable adhesive strength and tack. In one aspect, the adhesive is heated for seven days at a temperature of 70°C.

The coating of the adhesive onto the first substrate surface or the first substrate can be done in any conventional manner. The step of coating is carried out using known coating devices, such as for example a slot coater, a lipped die, or a curtain-coating type die, or else a roll. It employs a weight per unit area of adhesive composition ranging from 3 to 500 g/m², preferably from 10 to 250 g/m². The material that can be used for the substrate is, for example, paper or a film of polymer material having one or more layers, or others, such as those mentioned above.

As noted above, each embodiment mentions heating the adhesive to a second temperature which is at least about 20°C above the first temperature, preferably at least 30°C above the first temperature, and most preferably at least 50°C above the first temperature, and below the temperature at which the adhesive undergoes thermal degradation, preferably at least 10°C less than the thermal degradation temperature, more preferably at least 20°C less than the thermal degradation temperature. As used herein, the "thermal degradation temperature" is the temperature at which 5% weight loss is achieved in heating a sample from 25 °C to 400°C at a steady rate of 20 °C/min. In the first embodiment, the step of separating the first substrate surface from the second substrate surface at the second temperature can be done in any known fashion, such as by applying a shear or peel force. Similarly, in the second embodiment, the step of contacting the adhesive coated on the first substrate with the second substrate at the second temperature to cause the adhesive to transfer to the second substrate is carried out in a known fashion. It has been found that the heated adhesive tends to adhere to a substrate which is at a temperature below that of the adhesive and preferably at a sufficiently low temperature to cool the adhesive surface to a temperature at which the tack of that adhesive surface rises adequately to cause bonding, consistent with the probe tack data shown in the examples below. According to an aspect of any embodiments of the invention, the first temperature is about 15°C to about 35 °C, preferably between about 20°C to about 30 °C, and most preferably about 25°C, namely about room temperature. In other embodiments, the adhesive shows adequate tack and other adhesive properties to sufficient bond at temperatures about 0 °C or at elevated temperatures, such as at about 50°C, with the reduction in tack described herein occurring at at least about 20 °C above these temperatures, preferably at least 30°C above these temperatures, and most preferably at least 50°C above these temperatures.

According to a first aspect of the invention in accordance with the embodiments discussed above, the adhesive is an adhesive as described in U.S. Patent No. 8,691,909, incorporated herein by reference. In particular, the silyl-terminated polyether comprises two hydrolyzable alkoxysilane-type end groups, having a viscosity, measured at 23 °C., ranging from 25 to 40 Pa·s, and has a structure of formula (I): 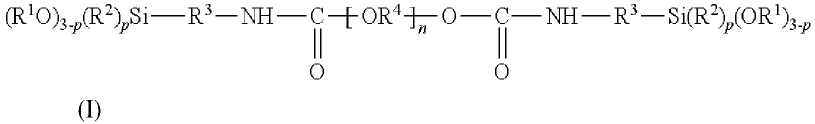 in which:
R¹ and R², which are identical or different, each represent a linear or branched alkyl radical having 1 to 4 carbon atoms, with the possibility, when there are several R¹ (or R²) radicals, that these are identical or different;
R³ represents a linear alkylene divalent radical comprising from 1 to 6 carbon atoms;
R⁴ represents a linear or branched alkylene divalent radical comprising from 1 to 4 carbon atoms;
n is an integer such that the number-average molecular weight Mₙ of the polymer of formula (I) is between 20 kDa and 40 kDa; and
p is an integer equal to 0, 1 or 2. The number-average (and weight-average) molecular weights of this first aspect are expressed in daltons (Da) and are determined by gel permeation chromatography, the column being calibrated with polystyrene standards.

In a preferred aspect according to this embodiment, formula (I) has at least one of the following features:
R¹ and R², which are identical or different, each represent a methyl or ethyl radical;
R³ represents a linear alkylene divalent radical comprising from 1 to 3 carbon atoms; and
R⁴ is chosen from the divalent radicals: ethylene, isopropylene, n-propylene, n-butylene, ethyl-ethylene.

In a further aspect of this embodiment, the following applies:
p=0 or 1;
R¹ and R² each represent the methyl radical; and
R⁴ is an alkylene radical having 3 carbon atoms.

In still another aspect according to this embodiment, the silyl-terminated polyether has a number-average molecular weight between about 30 and about 40 kDa and a viscosity between about 30 and about 37 Pa·s. In yet another aspect according to this embodiment, the silyl-terminated polyether has a polydispersity index ranging from 1 to 2.

According to a second aspect of the invention in accordance with the embodiments discussed above, the adhesive is an adhesive as described in U.S. Patent No. 7,671,144, incorporated herein by reference. In particular, the silyl-terminated polyether comprises an oxyalkylene polymer containing 0.3 to 0.7 equivalent of a hydrolyzable silyl group in each molecule and has a number average molecular weight between about 20 and 50 kDa. In a preferred embodiment, the oxyalkylene polymer has a Mw/Mn (molecular weight distribution) of no greater than 1.6. In yet another preferred embodiment, the silyl-terminated polyether comprises a hydrolyzable silyl group and the hydrolyzable silyl group is represented by the following general formula (II):

-SiXₐR²₃₋ₐ (II)

wherein, R² represents a substituted or unsubstituted monovalent organic group containing 1 to 20 carbon atoms, X represents a hydrolyzable group, and a represents 1, 2 or 3.

According to a third aspect of the invention in accordance with the embodiments discussed above, the silyl-terminated polyether has a formula (III) or (III') as described in WO 2019/186014, incorporated herein by reference. According to one embodiment of the invention, the silyl-terminated polyether corresponds to formula (III):

P[-O-R³-Si(R⁴)ₚ(OR⁵)₃₋ₚ]_{f} (III)

in which:
- R³ represents a linear or branched divalent alkylene radical comprising from 1 to 6 carbon atoms, preferably from 1 to 3 carbon atoms,
- R⁴ represents a linear or branched alkyl radical comprising from 1 to 4 carbon atoms, with the possibility that when there are several radicals R⁴, these radicals are identical or different;
- R⁵ represents a linear or branched alkyl radical comprising from 1 to 4 carbon atoms, with the possibility that when there are several radicals R⁵, these radicals are identical or different, with the possibility that two groups OR⁵ may be engaged in the same ring;
- p is an integer equal to 0, 1 or 2, preferably equal to 0 or 1;
- P represents a saturated or unsaturated, linear or branched polymeric radical optionally comprising one or more heteroatoms, such as oxygen, nitrogen, sulfur or silicon, and preferably having a number-average molar mass ranging from 100 g/mol to 48 600 g/mol, more particularly from 300 g/mol to 18 600 g/mol or from 500 g/mol to 12 600 g/mol,
- f is an integer ranging from 1 to 6, preferably ranging from 2 to 5, preferably from 2 to 4, more preferably from 2 to 3.

Preferably, in formula (III) above, P represents a polymer radical chosen, in a nonlimiting manner, from polyethers, polycarbonates, polyesters, polyolefins, polyacrylates, polyether polyurethanes, polyester polyurethanes, polyolefin polyurethanes, polyacrylate polyurethanes, polycarbonate polyurethanes, and block polyether/polyester polyurethanes.

According to a particular embodiment, the silyl-terminated polyether corresponds to formula (III'):

(R⁵⁰)₃₋ₚ(R⁴)Si-R³-O-R²-OR-Si(R⁴)ₚ(OR⁵)₃₋ₚ (III')

in which in formulae (III'):
- R³, R⁴, R⁵, and p have the same meaning as in formula (III) described above,
- R² represents a saturated or unsaturated, linear or branched divalent hydrocarbon-based radical optionally comprising one or more heteroatoms, such as oxygen, nitrogen, sulfur or silicon, and preferably having a number-average molar mass ranging from 100 g/mol to 48,600 g/mol, more particularly from 300 g/mol to 18,600 g/mol or from 500 g/mol to 12,600 g/mol,

In the silyl-terminated polyether of formula (III') defined above, when the radical R² comprises one or more heteroatoms, the heteroatom(s) are not present at the end of the chain. In other words, the free valencies of the divalent radical R² bonded to the oxygen atoms neighboring the silyl-terminated polyether each originate from a carbon atom. Thus, the main chain of the radical R² is terminated with a carbon atom at each of the two ends, the carbon atom then having a free valency.

According to one embodiment, the silyl-terminated polyether are obtained from polyols chosen from polyether polyols, polyester polyols, polycarbonate polyols, polyacrylate polyols, polysiloxane polyols and polyolefin polyols, and mixtures thereof, and more preferably from diols chosen from polyether diols, polyester diols, polycarbonate diols, polyacrylate diols, polysiloxane diols, polyolefin diols, and mixtures thereof. In the case of the polymers of formula (III') described above, such diols may be represented by the formula HO-R²-OH where R² has the same meaning as in formula (III').

For example, among the radicals of the type R² which may be present in formula (III'), mention may be made of the following divalent radicals, of which the formulae below show the two free valencies:
- derivative of a polypropylene glycol: 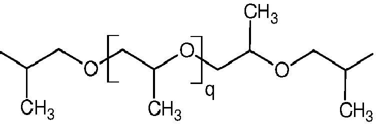
- derivative of a polyester diol: 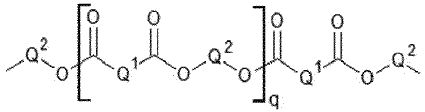
- derivative of a polybutadiene diol: 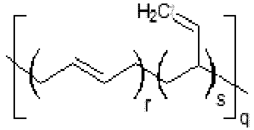
- derivative of a polyacrylate diol: 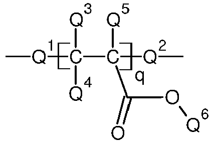
- derivative of a polysiloxane diol: 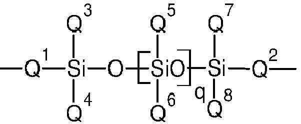 in which:
   q represents an integer such that the number-average molecular mass of the radical R² ranges from 100 g/mol to 48,600 g/mol, preferably from 300 g/mol to 18,600 g/mol, more preferably from 500 g/mol to 12,600 g/mol,
   r and s represent zero or a non-zero integer such that the number-average molecular mass of the radical R² ranges from 100 g/mol to 48,600 g/mol, preferably from 300 g/mol to 18,600 g/mol, more preferably from 500 g/mol to 12,600 g/mol, it being understood that the sum r+s is other than zero,
   Q¹ represents a linear or branched, saturated or unsaturated aromatic or aliphatic divalent alkylene radical preferably containing from 1 to 18 carbon atoms, more preferably from 1 to 8 carbon atoms,
   Q² represents a linear or branched divalent alkylene radical preferably containing from 2 to 36 carbon atoms, more preferably from 1 to 8 carbon atoms,
   Q³, Q⁴, Q⁵, Q⁶, Q⁷ and Q⁸, represent, independently of each other, a hydrogen atom or an alkyl, alkenyl or aromatic radical preferably containing from 1 to 12 carbon atoms, preferably from 2 to 12 carbon atoms, more preferably from 2 to 8 carbon atoms.

The polymers of formula (III) or (III') may be obtained by hydrosilylation of polyether diallyl ether according to a process described, for example, in EP 1 829 928. Among the polymers corresponding to formula (III), mention may be made of:
- the polymer MS SAX^{®} 350 (available from Kaneka) corresponding to a polyether comprising two groups (I) of dimethoxy type (p equal to 1 and R⁴ and R⁵ represent a methyl group) having a number-average molar mass ranging from 14 000 to 16 000 g/mol;
- the polymer MS SAX^{®} 260 (available from Kaneka) corresponding to a polyether comprising two groups (I) of dimethoxy type (p equal to 1, R⁴ and R⁵ represent a methyl group) having a number-average molar mass of 16,000 to 18,000 g/mol where R³ represents an ethyl group;
- the polymer MS S303H (available from Kaneka) corresponding to a polyether comprising two groups (I) of dimethoxy type (p is equal to 1 and R⁴ represents a methyl group) having a number-average molecular mass of about 22,000 daltons.

The molar mass of the polymers of this third aspect are determined by NMR and size exclusion chromatography using polystyrene standards.

In accordance with any embodiment described herein, the adhesive demonstrates at least one, preferably at least two, and more preferably all of the following:
the adhesive has at least 35%, preferably at least 40%, reduction of tack from the tack at the first temperature compared to the tack at the second temperature if the second temperature is about 30°C greater than the first temperature;
the adhesive has at least 60%, preferably at least 75%, reduction of tack from the tack at the first temperature compared to the tack at the second temperature if the second temperature is about 60°C greater than the first temperature; and
the adhesive has at least 70%, preferably at least 85%, reduction of tack from the tack at the first temperature compared to the tack at the second temperature if the second temperature is about 80°C greater than the first temperature.

In a preferred embodiment, after the cooling step in which the adhesive is returned to the first temperature, the adhesive has a tack at the first temperature after cooling of at least 80%, preferably at least 90%, of the tack at the first temperature prior to the heating step. This demonstrates the reversible nature of the adhesive. Upon returning to the original temperature, the adhesive demonstrates the same or substantially the same tack as the adhesive had originally. According to some embodiments, this tack upon cooling of at least 80%, preferably at least 90%, of the tack at the first temperature originally occurs after multiple heating and cooling cycles, such as after 2, 3, 5, 10, 20, 100, or more such cycles.

In a preferred aspect of the embodiment directed to a method of reversibly bonding a first substrate surface to a second substrate surface, the adhesive undergoes less than 5%, preferably less than 2%, and preferably substantially no cohesive failure upon separating the first substrate surface from the second substrate surface. The percentages described here are determined by approximating the surface area of the first substrate surface to which some adhesive remains adhered. By undergoing substantially no cohesive failure, it should be noted that the adhesive undergoes almost entirely adhesive failure. Moreover, the tack at the second temperature is sufficiently low such that even fragile substrates are not destroyed upon separating the substrate surfaces from one another. Similarly, in a preferred aspect of the embodiment directed to the adhesive being transferred to another substrate, the adhesive undergoes less than 5%, preferably less than 2%, and preferably substantially no cohesive failure upon transferring the adhesive to the second substrate.

The tackifying resin(s) which are included in the composition according to the invention are compatible with the silyl-terminated polyether which means that, when it is mixed in 50%/50% proportions with the polyether, provides a substantially homogeneous blend.

The resins are preferably chosen from the following, either individually or in combination:
(i) resins obtained by polymerization of terpene hydrocarbons and phenols, in the presence of Friedel-Crafts catalysts;
(ii) resins obtained by a process comprising the polymerization of α-methyl-styrene, the process possibly also including a reaction with phenols;
(iii) natural or modified rosins, such as for example the rosin extracted from pine gum, wood rosin extracted from tree roots and their derivatives that are hydrogenated, dimerized, polymerized, or esterified by monoalcohols or polyols such as glycerol;
(iv) resins obtained by hydrogenation, polymerization, or copolymerization (with an aromatic hydrocarbon) of mixtures of unsaturated aliphatic hydrocarbons having around 5, 9, or 10 carbon atoms derived from petroleum fractions;
(v) terpene resins, generally resulting from the polymerization of terpene hydrocarbons such as, for example, monoterpene (or pinene) in the presence of Friedel-Crafts catalysts;
(vi) copolymers based on natural terpenes, for example styrene/terpene, α-methylstyrene/terpene, and vinyltoluene/terpene; or
(vii) acrylic resins having a viscosity at 100° C of less than 100 Pa·s.

Such resins are commercially available and among those of type (i), (ii) and (iii) defined above, mention may be made of the following products:
resins of type (i): DERTOPHENE^{®} 1510 available from DRT that has a molecular weight Mn of around 870 Da; DERTOPHENE^{®} H150 available from the same company with a molecular weight Mₙ equal to around 630 Da; SYLVAREZ^{®} TP 95 available from Arizona Chemical having a molecular weight Mₙ of around 1200 Da;
resins of type (ii): NORSOLENE^{®} W100 available from Cray Valley, which is obtained by polymerization of α-methylstyrene without the action of phenols, with a number-average molecular weight of 900 Da; SYLVAREZ^{®} 510 which is also available from Arizona Chemical with a molecular weight Mₙ of around 1740 Da, the production process of which also comprises the addition of phenols;
resins of type (iii): SYLVALITE^{®} RE 100 which is a pentaerythritol rosin ester available from Arizona Chemical and having a molecular weight Mₙ of around 1700 Da; and
resins of type (iv): PICCOTAC^{™}, which are hydrocarbon resins commercially available from Eastman.

According to one preferred variant, use is made, as the resin, of a resin chosen from those of type (i) or (ii). According to another preferred variant, use is made, as the resin, of a resin of type (iii) and preferably a rosin ester.

A curing catalyst that can be used in the composition according to the invention may be any catalyst known to a person skilled in the art for silanol condensation. Mention may be made, as examples of such catalysts, of organic derivatives of titanium such as titanium acetyl acetonate (commercially available under the name TYZOR^{®} AA75 from DuPont), of aluminium such as aluminium chelate (commercially available under the name K-KAT^{®} 5218 from King Industries), of amines such as 1,8-diazobicyclo[5.4.0]undec-7-ene or DBU.

According to one preferred variant, the heat-curable adhesive composition comprises from 35 to 70%, preferably 40 to 65%, of the polyether and from 30 to 65%, preferably 35 to 60%, of the tackifying resin(s). The catalyst may be added in an amount as is typical depending on the type of catalyst used and its activity. Typical amounts range from 0.1 to 4%, preferably 0.5 to 2%. These percentages are weight percentages based on the adhesive composition.

Optionally, the composition according to the invention may also include, in combination with the polyether, thermoplastic polymers often used in the preparation of hot melt pressure sensitive adhesives, such as ethylene vinyl acetate (EVA) or styrene block copolymers.

Optionally, the composition according to the invention may also include, in combination with the polyether, a silsesquioxane. Silsesquioxanes are typically organosilicon compounds which can adopt a polyhedral structure or a polymeric structure, with Si-O-Si bonds. They typically have the following general structure:

[RSiO_{3/2}]t

in which R, which may be identical or different in nature, represents an organic radical and t is an integer which may range from 6 to 12, t preferably being equal to 6, 8, 10 or 12.

According to one embodiment, the silsesquioxane has a polyhedral structure (or POSS for "Polyhedral Oligomeric Silsesquioxane").

Preferably, the silsesquioxane corresponds to the general formula (X) below: 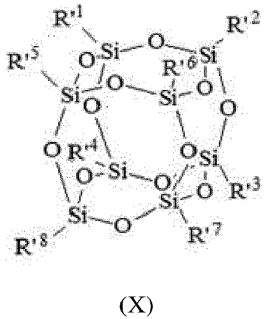 in which each of R'¹ to R'⁸ represents, independently of each other, a group chosen from:
- a hydrogen atom,
- a radical chosen from the group consisting of a linear or branched C1-C4 alkoxy radical, a linear or branched alkyl radical comprising from 1 to 30 carbon atoms, an alkenyl radical comprising from 2 to 30 carbon atoms, an aromatic radical comprising from 6 to 30 carbon atoms, an allyl radical comprising from 3 to 30 carbon atoms, a cyclic aliphatic radical comprising from 3 to 30 carbon atoms and an acyl radical comprising from 1 to 30 carbon atoms, and
- a group -OSiR'⁹R'¹⁰ in which R'⁹ and R'¹⁰ each represents, independently of each other, a hydrogen atom or a radical chosen from the group consisting of linear or branched C1-C4 alkyls, linear or branched C1-C4 alkoxys, C2-C4 alkenyls, a phenyl, a C3-C6 allyl radical, a cyclic C3-C8 aliphatic radical and a C1-C4 acyl radical;
provided:
- that at least one radical among the radicals R'¹ to R'⁸ is a C1-C4 alkoxy radical; and
- that at least one radical among the radicals R'¹ to R'⁸ is a phenyl radical.

Silsesquioxanes are known compounds that are notably described in patent application WO 2008/107331, incorporated herein by reference. Some are also commercially available, thus the product from Dow sold under the name: Dow Corning^{®} 3074 and Dow Corning^{®} 3037 (CAS number = 68957-04-0).

The heat-curable adhesive composition according to the invention may also comprise up to 3% of a hydrolysable alkoxysilane derivative, as a desiccant, and preferably a trimethoxysilane derivative. Such an agent advantageously prolongs the shelf life of the composition according to the invention during storage and transport, before the use thereof. Mention may be made, for example, of γ-methacryloxypropyltrimethoxysilane available under the trade name SILQUEST^{®} A-174 from US Momentive Performance Materials Inc.

The composition according to the invention may also include a plasticizer such as a phthalate or a benzoate, a paraffinic and naphthenic oil (such as PRIMOL^{®} 352 from Esso) or else a wax of a polyethylene homopolymer (such as A-C^{®} 617 from Honeywell) or a wax of a polyethylene/vinyl acetate copolymer, or else pigments, dyes or fillers.

Finally, an amount of 0.1 to 2% of one or more stabilizers (or antioxidants) is preferably included in the composition according to the invention. These compounds are introduced to protect the composition from degradation resulting from a reaction with oxygen which is capable of being formed by action of heat or light. These compounds may include primary antioxidants which trap free radicals and are, in particular, substituted phenols such as IRGANOX^{®} 1076 from Ciba. The primary antioxidants may be used alone or in combination with other secondary antioxidants or UV stabilizers.

The adhesive formulation may comprises, consist essentially of, or consist of the silyl-terminated polymer, a tackifying resin, and a catalyst. Preferably, the adhesive does not include effective amounts of, or preferably any, thermally expandable particles or polycaprolactone.

The heat-curable adhesive composition according to the invention may be prepared by a process which comprises:
a step of mixing in an air-free environment, preferably under an inert atmosphere, the polymer with the tackifying resin(s), at a temperature between 50 and 170° C, preferably between 100 and 170° C; then
a step of cooling said mixture to a temperature ranging from 50 to 90° C, and advantageously of around 70° C; then
a step of incorporating catalyst and, where appropriate, desiccant and other optional components into said mixture.

The self-adhesive support according to the invention may also comprise a protective non-stick layer that covers the pressure sensitive adhesive and is applied (or laminated) thereto by simple pressure. The present invention also relates to the use of the self-adhesive support defined previously for the manufacture of single-sided or double-sided self-adhesive labels and/or tapes.

As described herein, the inventive adhesives display unique attributes making them well-suited for reversible bonding applications. The inventive materials form strong bonds to substrates as shown by the high 180° peel strengths seen to stainless steel as well as the loop tack values to glass. The inventive materials have been shown to form strong bonds with a range of substrates, including stainless steel, and low surface energy substrates, such as polypropylene. Additionally, all display relatively high shear adhesion failure temperatures (i.e., greater than 100° C) required for high-performance bonding applications. Despite the ability to form bonds capable of resisting peel and shear forces, probe tack and de-/re-bonding experiments demonstrate that laminates made from the inventive adhesives can be easily peeled at elevated temperatures yet cooled and repositioned to form strong bonds through numerous cycles. Tapes with this class of thermally-reversible "on-demand de-bonding/re-bonding" would be expected to be useful in automotive and electronic industries; they could also find utility in packaging and tape and label applications where they could potentially be readily removed so as to not interfere with recycling processes.

### ASPECTS OF THE INVENTION

Aspect 1. A method of reversibly bonding a first substrate surface to a second substrate surface comprising the steps of:
   (a) adhering the first substrate surface to the second substrate surface by contacting the first substrate surface, wherein said first substrate surface is coated with a cured, thermally-reversible adhesive, with the second substrate surface at a first temperature;
   (b) heating the adhesive to a second temperature which is at least about 20°C above said first temperature, preferably at least 30°C above said first temperature, and most preferably at least 50°C above said first temperature, and below the temperature at which the adhesive undergoes thermal degradation preferably at least 10°C less than the thermal degradation temperature, more preferably at least 20°C less than the thermal degradation temperature; and
   (c) separating the first substrate surface from the second substrate surface at said second temperature,
      wherein the adhesive comprises the cured product of a silyl-terminated polyether and a tackifying resin.
Aspect 2. A method of transferring a thermally-reversible adhesive from a first substrate to a second substrate comprising the steps of:
   (a) coating a cured, thermally-reversible adhesive to the first substrate at a first temperature to form a coated first substrate;
   (b) heating the adhesive to a second temperature which is at least about 20°C above said first temperature, preferably at least 30°C above said first temperature, and most preferably at least 50°C above said first temperature, and below the temperature at which the adhesive undergoes thermal degradation, preferably at least 10 °C less than the thermal degradation temperature, more preferably at least 20°C less than the thermal degradation temperature; and
   (c) contacting the adhesive coated on the first substrate with the second substrate at said second temperature to cause the adhesive to transfer to the second substrate,
      wherein the adhesive comprises the cured product of a silyl-terminated polyether and a tackifying resin.
Aspect 3. The method of Aspect 1 further comprising, after the separating step, cooling the adhesive to the first temperature and adhering the first substrate surface to one of the second substrate surface or a third substrate surface, by contacting the first substrate surface with the second substrate surface or the third substrate surface, at said first temperature.
Aspect 4. The method of Aspect 3 further comprising repeating the heating, separating, cooling, and adhering steps.
Aspect 5. The method of any of Aspects 1-4, wherein said first temperature is about 15°C to about 35 °C, preferably between about 20°C to about 30 °C, and most preferably about 25°C.
Aspect 6. The method of any of Aspects 1-5, wherein the first substrate forms, with the adhesive, a tape, and the material of the first substrate is selected from the group consisting of polyester, polyolefin, and polystryrene.
Aspect 7. The method of any of Aspects 1-6, wherein the silyl-terminated polyether comprises two hydrolyzable alkoxysilane-type end groups, having a viscosity, measured at 23 °C., ranging from 25 to 40 Pa·s, and has a structure of formula (I): 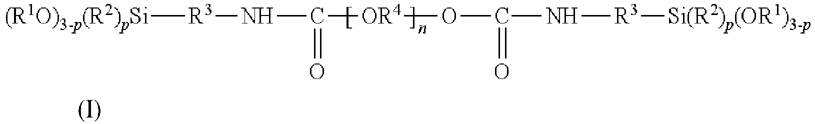 in which:
   R¹ and R², which are identical or different, each represent a linear or branched alkyl radical having 1 to 4 carbon atoms, with the possibility, when there are several R¹ (or R²) radicals, that these are identical or different;
   R³ represents a linear alkylene divalent radical comprising from 1 to 6 carbon atoms;
   R⁴ represents a linear or branched alkylene divalent radical comprising from 1 to 4 carbon atoms;
   n is an integer such that the number-average molecular weight Mₙ of the polymer of formula (I) is between 20 kDa and 40 kDa; and
   p is an integer equal to 0, 1 or 2.
Aspect 8. The method of Aspect 7, wherein formula (I) has at least one of the following features:
   R¹ and R², which are identical or different, each represent a methyl or ethyl radical;
   R³ represents a linear alkylene divalent radical comprising from 1 to 3 carbon atoms; and
   R⁴ is chosen from the divalent radicals: ethylene, isopropylene, n-propylene, n-butylene, ethyl-ethylene.
Aspect 9. The method of Aspect 7, wherein:
   p=0 or 1;
   R¹ and R² each represent the methyl radical; and
   R⁴ is an alkylene radical having 3 carbon atoms.
Aspect 10. The method of any of Aspects 7-9, wherein the silyl-terminated polyether has a number-average molecular weight between about 30 and about 40 kDa and a viscosity between about 30 and about 37 Pa·s.
Aspect 11. The method of any of Aspects 7-10, wherein the silyl-terminated polyether has a polydispersity index ranging from 1 to 2.
Aspect 12. The method of any of Aspects 1-6, wherein the silyl-terminated polyether comprises an oxyalkylene polymer containing 0.3 to 0.7 equivalent of a hydrolyzable silyl group in each molecule and has a number average molecular weight between about 20 and 50 kDa.
Aspect 13. The method of Aspect 12, wherein the oxyalkylene polymer has a Mw/Mn (molecular weight distribution) of no greater than 1.6.
Aspect 14. The method of Aspects 12 or 13, wherein the silyl-terminated polyether comprises a hydrolyzable silyl group and the hydrolyzable silyl group is represented by the following general formula (II):

   -SiXₐR²₃₋ₐ (II)

   wherein, R² represents a substituted or unsubstituted monovalent organic group containing 1 to 20 carbon atoms, X represents a hydrolyzable group, and a represents 1, 2 or 3.
Aspect 15. The method of any of aspects 1-6, wherein the silyl-terminated polyether corresponds to formula (III):

   P[-O-R³-Si(R⁴)p(OR⁵)₃₋ₚ]_{f} (III)

   in which:
   - R³ represents a linear or branched divalent alkylene radical comprising from 1 to 6 carbon atoms, preferably from 1 to 3 carbon atoms,
   - R⁴ represents a linear or branched alkyl radical comprising from 1 to 4 carbon atoms, with the possibility that when there are several radicals R⁴, these radicals are identical or different;
   - R⁵ represents a linear or branched alkyl radical comprising from 1 to 4 carbon atoms, with the possibility that when there are several radicals R⁵, these radicals are identical or different, with the possibility that two groups OR⁵ may be engaged in the same ring;
   - p is an integer equal to 0, 1 or 2, preferably equal to 0 or 1;
   - P represents a saturated or unsaturated, linear or branched polymeric radical optionally comprising one or more heteroatoms, such as oxygen, nitrogen, sulfur or silicon, and preferably having a number-average molar mass ranging from 100 g/mol to 48 600 g/mol, more particularly from 300 g/mol to 18,600 g/mol or from 500 g/mol to 12 600 g/mol,
   - f is an integer ranging from 1 to 6, preferably ranging from 2 to 5, preferably from 2 to 4, more preferably from 2 to 3.
Aspect 16. The method of Aspects 1-15, wherein the adhesive demonstrates at least one, preferably at least two, and more preferably all of the following:
   the adhesive has at least 35%, preferably at least 40%, reduction of tack from the tack at said first temperature compared to the tack at said second temperature if said second temperature is about 30 °C greater than said first temperature;
   the adhesive has at least 60%, preferably at least 75%, reduction of tack from the tack at said first temperature compared to the tack at said second temperature if said second temperature is about 60°C greater than said first temperature; and
   the adhesive has at least 70%, preferably at least 85%, reduction of tack from the tack at said first temperature compared to the tack at said second temperature if said second temperature is about 80°C greater than said first temperature.
Aspect 17. The method of Aspect 3, wherein, after the cooling step, the adhesive has a tack at said first temperature of at least 80%, preferably at least 90%, of the tack at said first temperature prior to the heating step.
Aspect 18. The method of any of Aspects 1, 3, or 4, wherein, upon separating the first substrate surface from the second substrate surface, the adhesive undergoes less than 5%, preferably less than 2%, and preferably substantially no cohesive failure.
Aspect 19. The method of Aspect 2, wherein, upon transferring the adhesive to the second substrate, the adhesive undergoes less than 5%, preferably less than 2%, and preferably substantially no cohesive failure.
Aspect 20. The method of any of Aspects 1-19, wherein the adhesive does not include effective amounts of thermally expandable particles or polycaprolactone.
Aspect 21. The method of any of Aspects 1-20, wherein the adhesive further comprises a silsesquioxane.

### EXAMPLES

SAX510 is a viscous, low polar liquid polymer possessing a polypropyleneoxide main chain terminated with trimethoxysilyl groups commercially available from Kaneka Corporation.

DERTOPHENE H150 is a terpene phenolic resin commercially available from DRT. It is reported to have a ring and ball softening point (RBSP) of 118 °C and a molecular weight (Mw) of approximately 700 g/mol.

K-Kat 5218 is an aluminum chelate complex present to promote crosslinking, commercially available from King Industries, Inc.

### Sample Preparation

The reactor vessel was charged with DETHOPHENE H150 and heated to 160 °C under vacuum. Once the resin was thoroughly molten, the silane-containing polymer SAX510 was added. The mixture was stirred under vacuum for 15 minutes and cooled to 70°C. The catalyst (K-KAT^{®} 5218) was then introduced. The mixture was kept under vacuum and stirred an additional 10 minutes. The amounts of the constituents for the three examples are shown below in Table 1.

The sample was then heated to 100 °C and slot-coated to mylar film (50 µ) to generate a tape with an adhesive add-on level of approximately 60 g/m². The resultant tape was then placed in an oven at 70 °C and allowed to cure for seven days. Inventive samples are listed in Table 1 along with the resultant bonding results.

### 180° Peel Test

The adhesive strength was evaluated by the 180° peel test on a sample plate (stainless steel, PE, or PP). A test specimen in the form of a rectangular strip (25 mm x 175 mm) was cut from the PET carrier coated with the cured composition obtained previously. This test specimen was, after the preparation thereof, stored for 24 hours at a temperature of 23 °C and in a 50% humidity atmosphere. It was then fastened over two-thirds of its length to a substrate constituted of a test plate. The assembly obtained was left for 20 minutes at room temperature. It was then placed in a tensile testing machine capable, starting from the end of the rectangular strip that was left free, of peeling or debonding the strip at an angle of 180° and with a separation rate of 300 mm per minute. The machine measures the force required to de-bond the strip under these conditions.

### Temperature Dependent Probe Tack:

Probe tack measurements were performed on an Ares 2000 rheometer equipped with 25 mm parallel plates. A sample of adhesive tape approximately 400 µ thick was mounted on the bottom plate of the rheometer at room temperature (*ca*. 22 °C). Starting from a 2000 µ gap, the top plate was next brought down at a rate of 1 µ/s until contact with the test sample was made and the normal force of compression reached 5 N. At this time, the top plate was withdrawn at a rate of 1 µ/s and the normal force of detachment was monitored as a gauge of the intrinsic tack of the sample. This test was repeated on the same sample at 30 °C, 50 °C, 80 °C, and 100 °C. Tack at each temperature corresponds to the peak normal force seen during retraction of the upper test plate. To screen the thermal-reversible nature of the material, one sample, Ex 2, was retested after the sample was allowed to cool to room temperature on the rheometer plate after recording the data at 100 °C.

As shown in Table 1, tack values of the inventive examples (Ex 1, Ex 2, and Ex 3) trend inversely with temperature and steadily drop over 80% moving from 22 to 80 °C. Surprisingly, this process appears fully reversible as shown by tests run on the inventive Ex 2 formulation. Upon cooling the Ex 2 sample back to lower temperatures in the rheometer, a full recovery of tack is seen (data displayed in Table 1 as "Re-cooling Probe Tack"). This feature makes the inventive formulations (Ex 1, Ex 2, and Ex 3) especially well-suited for reversibly bonding on demand adhesive applications.

### Thermally-Reversible Bonding Tests.

A 0.5 x 1.0 inch sample of Ex 2 coated between mylar sheets was transferred to a stainless steel test plate. Next, a 1 x 4 inch strip of mylar was placed over the adhesive and gentle pressure was applied to form a bond. The stainless steel plate was then mounted vertically and a 200 g weight was attached to the mylar such that a 180° peel force was imposed. No movement of the system was seen over the course of two hours; this result was expected based on the high bond values seen in standard peel testing.

The weight was next removed and the sample was mounted vertically in an oven at 80 °C. After allowing the temperature of the sample to equilibrate, the 200 g weight was again fixed to the mylar test strip in a manner to apply a 180° peel force. In less than one minute at 80 °C, complete bond failure was seen. The failure was purely adhesive in nature with the mylar strip delaminating cleanly from the adhesive tape leaving no residues (i.e., no cohesive failure). After mylar delamination, the adhesive remaining on the stainless steel plate appeared dimensionally unchanged from the initial application; no permanent deformation of the tape was observed.

The stainless steel plate and adhesive were next cooled to room temperature over the course of 30 minutes and a new 1 x 4 inch strip of mylar was bonded to the adhesive on the stainless steel test plate. A 200 g weight was then attached to the mylar in a manner to apply a pure shear force. No movement in the bond was seen after 12 hours. The sample was next repositioned such the 200 g weight was exerting a 180° peel force. Again, no movement in the adhesive joint was seen, demonstrating the remarkable rebonding ability of the Ex 2 sample.

The weight was next removed and the sample was mounted vertically in an oven at 80 °C. After allowing the sample to equilibrate for 30 minutes, a 200 g weight was placed on the sample in a manner to apply a pure shear force on the sample. After five hours under these conditions, no movement of the weight nor any distortion of the bond was detected. At this time, the 200 g weight was removed and replaced with a 1 kg weight. Under these higher shear conditions, shear bonding failure was seen within minutes. In this case, pure adhesive failure from the stainless steel plate was seen.

The plate and mylar with transferred adhesive were next cooled to room temperature. After this time, the mylar strip was re-adhered to the stainless steel plate. The plate was mounted vertically and a 1 kg weight was attached to the mylar to impose a shear peel force on the sample. After 1 day, no movement was seen.

As shown, the inventive materials form strong bonds to polar substrates as shown by the high 180 ° peel strengths seen to stainless steel as well as the loop tack values to glass. Additionally, all display relatively high shear adhesion failure temperatures (i.e., greater than 100 °C) required for high-performance bonding applications.

**Table 1. Inventive Formulations and Properties**

| **Sample** | **Ex 1** | **Ex 2** | **Ex 3** |
|---|---|---|---|
| **SAX510, wt%** | 49.5 | 45.0 | 43.3 |
| **Dertophene 150, wt%** | 49.5 | 54.0 | 56.2 |
| **K-KAT 5218 catalyst, wt%** | 1 | 1 | 0.5 |
| **SAFT °C** | 141 | 159 | 114 |
| **Failure Mode** | AF | AF | AF |
| **180° peel SS, N/inch** | 24.9 | 41.5 | 48.6 |
| **180° peel PP, N/inch** | 2.7 | 1.4 | 1.5 |
| **180° peel HDPE, N/inch** | 7.8 | 0.8 | 0.6 |
| **Loop tack glass, N/inch²** | 47.3 | 50.6 | 35.87 |
| **Probe Tack at 22 °C, N** | 7.8 | 19.6 | 11.6 |
| **Probe Tack at 30 °C, N** | 7.4 | 11.6 | 7.6 |
| **Probe Tack at 50 °C, N** | 4.3 | 8.3 | 6.6 |
| **Probe Tack at 80 °C, N** | 1.2 | 3.5 | 1.6 |
| **Probe Tack at 100 °C, N** | 0 | 1.5 | 0.5 |
| **Re-cooling Probe Tack 30 °C, N** | nr | 16.4 | nr |
| **Re-cooling Probe Tack 22 °C, N** | nr | 18.4 | nr |

The probe tack tests descrived above were repeated on four comparative examples, the results of which are shown below in Table 2. In particular, the grades serving as competitive examples are described below:
H2211 - A styrene block copolymer-based adhesive commercially available from Bostik, Inc. used for binding trim and sound deadening applications.
3M468MP - An acrylate-based adhesive commercially available from 3M used for a variety of applications including splicing and laminating procedures with metals and plastics.
3M VHB - An acrylic based adhesive commercially available from 3M designed to bond a variety of materials including aluminum, steel, glass, plastics and painted and powder-coated surfaces.
Tesa ACX - An acrylate-based adhesive commercially available from Tesa and designed for permanent interior and exterior bonding and mounting applications.

**Table 2. Tack of Inventive Formulations and Comparative Examples**

| | MC-Sample (this work) | | | SBc Baseline | Competitive Grades | | |
|---|---|---|---|---|---|---|---|
| Probe Tack at T = , N | Ex 1 | Ex 2 | Ex 3 | H2211 | 3M468MP | 3M VHB | Tesa ACX |
| 22 °C | 7.8 | 19.6 | 11.6 | 8.2 | 4.6 | 22.6 | 17.3 |
| 30 °C | 7.4 | 11.6 | 7.6 | 6.0 | 5.8 | 17.9 | 15.4 |
| 50 °C | 4.3 | 8.3 | 6.6 | 4.3* | 3.5* | 18.7* | 11.1* |
| 80 °C | 1.2 | 3.5 | 1.6 | 4.3* | 3.6* | - | 10.1* |
| 100 °C | - | 1.46 | 0.46 | - | 2.81 | - | 8.6^{*} |
| Change from RT at T=,% | | | | | | | |
| 30 °C | -5.1 | -40.8 | -34.3 | -26.0 | 25.7 | -21.2 | -11.2 |
| 50 °C | -44.9 | -57.7 | -43.3 | -47.1^{*} | -23.5* | -17.5^{*} | -35.8* |
| 80 °C | -84.6 | -82.1 | -86.3 | -47.9^{*} | -22.0* | - | -41.7* |
| 100 °C | | -92.5 | -96.0 | - | -38.8* | - | -50.4* |
| Note: The asterisk (*) represents tests where at least some cohesive failure was observed. | | | | | | | |

The data presented in Table 2 demonstrates the advantages of the inventive adhesives. First, the baseline and the competitive samples do not lose nearly as much tack with temperature as the examples of the present invention. Additionally, all of the comparative samples display some degree of cohesive failure at 50°C, which clearly contrasts the clean adhesive failures seen for the inventive formulations.

Where a range of values is provided, it is understood that each intervening value, and any combination or sub-combination of intervening values, between the upper and lower limit of that range and any other stated or intervening value in that stated range, is encompassed within the range of values recited. In addition, the invention includes a range of a constituent which is the lower limit of a first range and an upper limit of a second range of that constituent.

Unless defined otherwise, all technical and scientific terms used herein have the same meanings as commonly understood by one of ordinary skill in the art to which this invention belongs. All publications and patents specifically mentioned herein are incorporated by reference in their entirety for all purposes including describing and disclosing the chemicals, instruments, statistical analyses and methodologies which are reported in the publications which might be used in connection with the invention. All references cited in this specification are to be taken as indicative of the level of skill in the art. Nothing herein is to be construed as an admission that the invention is not entitled to antedate such disclosure by virtue or prior invention.

Although illustrated and described herein with reference to certain specific embodiments, the present invention is nevertheless not intended to be limited to the details shown. Rather, various modifications may be made in the details within the scope and range of equivalents of the claims and without departing from the spirit of the invention.

## Claims

1. A method of reversibly bonding a first substrate surface to a second substrate surface comprising the steps of:
(a) adhering the first substrate surface to the second substrate surface by contacting the first substrate surface, wherein said first substrate surface is coated with a cured, thermally-reversible adhesive, with the second substrate surface at a first temperature;
(b) heating the adhesive to a second temperature which is at least about 20 °C above said first temperature, preferably at least 30 °C above said first temperature, and most preferably at least 50 °C above said first temperature, and below the temperature at which the adhesive undergoes thermal degradation preferably at least 10 °C less than the thermal degradation temperature, more preferably at least 20 °C less than the thermal degradation temperature; and
(c) separating the first substrate surface from the second substrate surface at said second temperature,
wherein the adhesive comprises the cured product of a silyl-terminated polyether and a tackifying resin.

2. A method of transferring a thermally-reversible adhesive from a first substrate to a second substrate comprising the steps of:
(a) coating a cured, thermally-reversible adhesive to the first substrate at a first temperature to form a coated first substrate;
(b) heating the adhesive to a second temperature which is at least about 20 °C above said first temperature, preferably at least 30 °C above said first temperature, and most preferably at least 50 °C above said first temperature, and below the temperature at which the adhesive undergoes thermal degradation, preferably at least 10 °C less than the thermal degradation temperature, more preferably at least 20 °C less than the thermal degradation temperature; and
(c) contacting the adhesive coated on the first substrate with the second substrate at said second temperature to cause the adhesive to transfer to the second substrate,
wherein the adhesive comprises the cured product of a silyl-terminated polyether and a tackifying resin.

3. The method of claim 1 further comprising, after the separating step, cooling the adhesive to the first temperature and adhering the first substrate surface to one of the second substrate surface or a third substrate surface, by contacting the first substrate surface with the second substrate surface or the third substrate surface, at said first temperature.

4. The method of claim 3 further comprising repeating the heating, separating, cooling, and adhering steps.

5. The method of any of claims 1-4, wherein said first temperature is about 15 °C to about 35 °C, preferably between about 20 °C to about 30 °C, and most preferably about 25°C.

6. The method of any of claims 1-5, wherein the first substrate forms, with the adhesive, a tape, and the material of the first substrate is selected from the group consisting of polyester, polyolefin, and polystryrene.

7. The method of any of claims 1-6, wherein the silyl-terminated polyether comprises two hydrolyzable alkoxysilane-type end groups, having a viscosity, measured at 23 °C., ranging from 25 to 40 Pa·s, and has a structure of formula (I): 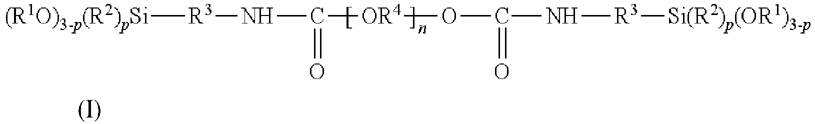 in which:
R¹ and R², which are identical or different, each represent a linear or branched alkyl radical having 1 to 4 carbon atoms, with the possibility, when there are several R¹ (or R²) radicals, that these are identical or different;
R³ represents a linear alkylene divalent radical comprising from 1 to 6 carbon atoms;
R⁴ represents a linear or branched alkylene divalent radical comprising from 1 to 4 carbon atoms;
n is an integer such that the number-average molecular weight Mₙ of the polymer of formula (I) is between 20 kDa and 40 kDa; and
p is an integer equal to 0, 1 or 2.

8. The method of claim 7, wherein formula (I) has at least one of the following features:
R¹ and R², which are identical or different, each represent a methyl or ethyl radical;
R³ represents a linear alkylene divalent radical comprising from 1 to 3 carbon atoms; and
R⁴ is chosen from the divalent radicals: ethylene, isopropylene, n-propylene, n-butylene, ethyl-ethylene.

9. The method of claim 7, wherein:
p=0 or 1;
R¹ and R² each represent the methyl radical; and
R⁴ is an alkylene radical having 3 carbon atoms.

10. The method of any of claims 1-6, wherein the silyl-terminated polyether comprises an oxyalkylene polymer containing 0.3 to 0.7 equivalent of a hydrolyzable silyl group in each molecule and has a number average molecular weight between about 20 and 50 kDa.

11. The method of claim 10, wherein the silyl-terminated polyether comprises a hydrolyzable silyl group and the hydrolyzable silyl group is represented by the following general formula (II):
-SiXₐR²₃₋ₐ (II)
wherein, R² represents a substituted or unsubstituted monovalent organic group containing 1 to 20 carbon atoms, X represents a hydrolyzable group, and a represents 1, 2 or 3.

12. The method of claims 1 or 2, wherein the silyl-terminated polyether corresponds to formula (III):
P[-O-R³-Si(R⁴)ₚ(OR⁵)₃₋ₚ]_{f} (III)
in which:
- R³ represents a linear or branched divalent alkylene radical comprising from 1 to 6 carbon atoms, preferably from 1 to 3 carbon atoms,
- R⁴ represents a linear or branched alkyl radical comprising from 1 to 4 carbon atoms, with the possibility that when there are several radicals R⁴, these radicals are identical or different;
- R⁵ represents a linear or branched alkyl radical comprising from 1 to 4 carbon atoms, with the possibility that when there are several radicals R⁵, these radicals are identical or different, with the possibility that two groups OR⁵ may be engaged in the same ring;
- p is an integer equal to 0, 1 or 2, preferably equal to 0 or 1;
- P represents a saturated or unsaturated, linear or branched polymeric radical optionally comprising one or more heteroatoms, such as oxygen, nitrogen, sulfur or silicon, and preferably having a number-average molar mass ranging from 100 g/mol to 48 600 g/mol, more particularly from 300 g/mol to 18,600 g/mol or from 500 g/mol to 12 600 g/mol,
- f is an integer ranging from 1 to 6, preferably ranging from 2 to 5, preferably from 2 to 4, more preferably from 2 to 3.

13. The method of claims 1 or 2, wherein the adhesive demonstrates at least one, preferably at least two, and more preferably all of the following:
the adhesive has at least 35%, preferably at least 40%, reduction of tack from the tack at said first temperature compared to the tack at said second temperature if said second temperature is about 30 °C greater than said first temperature;
the adhesive has at least 60%, preferably at least 75%, reduction of tack from the tack at said first temperature compared to the tack at said second temperature if said second temperature is about 60 °C greater than said first temperature; and
the adhesive has at least 70%, preferably at least 85%, reduction of tack from the tack at said first temperature compared to the tack at said second temperature if said second temperature is about 80 °C greater than said first temperature.

14. The method of claim 3, wherein, after the cooling step, the adhesive has a tack at said first temperature of at least 80%, preferably at least 90%, of the tack at said first temperature prior to the heating step.

15. The method of claims 1 or 2, wherein, upon separating the first substrate surface from the second substrate surface, the adhesive undergoes less than 5%, preferably less than 2%, and preferably substantially no cohesive failure.
